# EUROPÄISCHE PATENTSCHRIFT

(11) **EP 1 310 846 B1**
(45) Veröffentlichungstag und Bekanntmachung des Hinweises auf die Patenterteilung: **01.08.2012**
(21) Anmeldenummer: 02021043.1
(22) Anmeldetag: 20.09.2002
(51) Int. Cl.: G05B 19/418, H04L 12/403, H04L 12/417

(54) **Bandbreitennutzung bei azyklischer Kommunikation**
Usage of the bandwith by acyclic communication
Utilisation de la largeur de bande dans un système de communication acyclique

(30) Priorität: 02.10.2001 DE 10148753
(43) Veröffentlichungstag der Anmeldung: 14.05.2003
(73) Patentinhaber: SIEMENS AKTIENGESELLSCHAFT, 80333 München (DE)
(72) Erfinder: Steindl, Günter, 92284 Trasslberg (DE)

(56) Entgegenhaltungen:
- DE-C1- 4 242 197
- RAJA P ET AL: "Priority polling and dynamic time-window mechanisms in a multicycle Fieldbus" COMPEURO '93. 'COMPUTERS IN DESIGN, MANUFACTURING, AND PRODUCTION', PROCEEDINGS. PRIS-EVRY, FRANCE 24-27 MAY 1993, LOS ALAMITOS, CA, USA,IEEE COMPUT. SOC, US, 24. Mai 1993 (1993-05-24), Seiten 452-460, XP010096105 ISBN: 0-8186-4030-8

## Beschreibung

Bei PROFIBUS-DP gibt es viele Protokolle welche die Quittung für eine bestehende Kommunikationsbeziehung zyklisch abfragen (pollen). Da die Kommunikationspartner unterschiedlich schnell auf die Aufträge reagieren, werden sehr viele "Abfrage-"Telegramme unnötig über den PROFIBUS gesendet und beantwortet. Da die Bandbreite für diese Kommunikation beschränkt ist, wird dadurch die Performance unnötig gebremst. Dieses Probleme wurde bisher durch eine Begrenzung mit Queuing in der Applikation bzw. durch die Lawinenstrategie gelöst. Dabei werden die Aufträge gesammelt und in einem "sicheren" zeitlichen Abstand zwischen zwei "Lawinen" an den PROFIBUS übergeben. Dadurch bleiben zeitliche Lücken für weitere Protokolle.

Das Dokument DE 42 42 197 beschreibt ein Verfahren zum Betrieb eines Regelsystems mit einer Mehrzahl von Sensoren/Aktoren, wobei eine verbesserte Bandbreitennutzung erfolgt indem während die für das Polling nicht benötigte Zeit der Abfrageperiode zusätzlich eine ereignisbedingte Kommunikation zugelassen wird. Es wird sichergestellt, dass diese Kommunikation so rechtzeitig beendet wird, dass ein vollständiges Polling während der Abfrageperiode möglich ist.

Der Erfindung liegt die Aufgabe zugrunde, ein Verfahren sowie ein System anzugeben, welches die genannten Nachteile vermeidet.

Diese Aufgabe wird mit dem im Anspruch 1 angegebenen Verfahren bzw. mit dem im Anspruch 2 angegebenen System gelöst.

Im Folgenden wird unter dem Begriff Bandbreite die Anzahl der gleichzeitig laufenden Aufträge verstanden. In einem Erstauftrag werden die benötigten Daten für einen Auftrag übertragen. In einem Abfrageauftrag wird das Ergebnis des Erstauftrages abgeholt (gepollt). Mit Ruhepause wird die Anzahl der Buszyklen für die ein Abfrageauftrag pausiert bezeichnet.

Bei dem im Nachfolgenden beschriebenen Verfahren werden die einzelnen Aufträge (Erst- und Abfrageaufträge) über eine für jeden Auftrag einzeln definierbare "Ruhepause" in einander verschachtelt.

Stellt eine Applikation einen Auftrag (Erstauftrag), so wird dieser über eine Kommunikationsbeziehung an einen Partner übertragen. Bei einer positiven Quittung wird dieser Erstauftrag in einen Abfrageauftrag umgewandelt und für die angegebene Ruhepause "geparkt". Als Einheit für die Ruhepause kann bei PROFIBUS-DP z. B. die Anzahl der Buszyklen herangezogen werden. Jeder geparkte Auftrag macht Platz für einen weiteren Erstauftrag bzw. für einen geparkten Abfrageauftrag. Solange als Antwort auf den Abfrageauftrag "weiter warten" empfangen wird, setzt sich dieses Verfahren (Pollen => einparken => warten => ausparken => pollen) fort. Bei anderen Antworten bricht diese Sequenz ab und der Auftrag geht an die Applikation zurück.

Als weiteres Regulativ kann nun zusätzlich die Anzahl der gleichzeitig je Buszyklus zu versendenden Aufträge festgelegt werden. Dadurch ist bei konstanter Bandbreite die Anzahl der gleichzeitig aktiven Aufträge unbegrenzt.

Erfindungsgemäss ist die adaptive Verkürzung der Ruhepause je nach Anzahl der bereits erfolgten Abfrageaufträge, da mit steigender Anzahl der Abfragen (steigende Zeit) die Wahrscheinlichkeit einer positiven Antwort auf den Abfrageauftrag steigt.

Durch die Integration dieses Verfahrens in ASICs (= Application-Specific Integrated Circuit = anwenderspezifischer integrierter Schaltkreis) wird die Applikation (das Automatisierungsgerät) von der Steuerung für diese Aufträge entlastet. Zusätzlich ist eine Steigerung der Anzahl der gleichzeitig aktiven Aufträge ohne die Applikation zu belasten möglich. Bei einer konstanten Bandbreite wird die Übertragung schneller bzw. bei gleicher Geschwindigkeit wird weniger Bandbreite benötigt.

Die Erfindung ist zur Verwendung in ASICs für die PROFIBUS-Protokolle (PROFIBUS-DP MasterSlave-Azyklisch Klasse 1, MasterSlave-Azyklisch Klasse 2 und MasterMaster-Azyklisch) vorgesehen. Sie ist aber grundsätzlich auf alle pollenden Protokolle anwendbar. Allgemein wird unter Polling eine zyklische Abfrage verstanden. Der Begriff wird daher in den unterschiedlichsten Kontexten gebraucht. So ist Polling z.B. ein Netzwerk-Zugriffsverfahren, bei dem eine zentrale Station (Master) alle anderen Stationen (Slaves) reihum abfragt (pollt). Der Master kann die Slaves fragen, ob sie Daten zu übertragen haben, oder kann benötigte Daten direkt anfordern. In einem reinen Master-Slave-Netz kann es immer nur einen Master geben. Um mehrere Master zu erlauben, muss das Pollingverfahren mit anderen Zugriffsverfahren kombiniert werden. So erfolgt z. B. beim Profibus die Arbitrierung des Masters über ein Token-Rotationsverfahren. Unter Arbitration versteht man die möglichst gerechte Zuteilung von Ressourcen (Leitungen, Busse, Geräte) an die Benutzer. Als Token-Passing wird ein Zugriffsverfahren bezeichnet, das mit Hilfe eines Tokens die Sendeberechtigung vergibt. Der Token wird von Station zu Station weitergegeben. Außerdem muss Token-Passing Vorkehrungen treffen für das An- und Abschalten von Stationen (Station im Tokenumlauf aufnehmen oder streichen) sowie für einen Tokenverlust (Station, die gerade den Token besitzt, fällt aus). U. A. arbeiten IEEE 802.4, IEEE 802.5, Arcnet, FDDI, Modbus Plus und Profibus mit Token-Passing. Großer Vorteil des Token-Passings ist das deterministische Übertragungsverhalten solcher Netze.

Zusammengefasst betrifft die Erfindung somit ein Verfahren und ein System zur Abwicklung von Aufträgen in einem Automatisierungssystem, insbesondere bei azyklischer Kommunikation. Bei dem Verfahren werden in Erstaufträgen Daten von mindestens einer Applikation an einen Kommunikationspartner übertragen, in Abfrageaufträgen von der Applikation auf den Erstaufträgen beruhende Ergebnisse beim Kommunikationspartner abgefragt und die Abfrageaufträge während jeweils bestimmbarer Zeitabschnitte nicht ausgeführt.

## Patentansprüche

1. Verfahren zur Erhöhung einer Anzahl gleichzeitig laufender Aufträge bei der Abwicklung von Aufträgen in einem Automatisierungssystem, bei welchem Verfahren
- in Erstaufträgen Daten von mindestens einer Applikation an einen Kommunikationspartner übertragen werden, wobei bei einer positiven Quittung von dem Kommunikationspartner die Erstaufträge in Abfrageaufträge umgewandelt werden, und
- in den Abfrageaufträgen von der Applikation auf den Erstaufträgen beruhende Ergebnisse beim Kommunikationspartner abgefragt werden und
- die Abfrageaufträge während jeweils bestimmbarer Zeitabschnitte in einer Ruhepause nicht ausgeführt werden,
**dadurch gekennzeichnet, dass** je nach Anzahl der bereits erfolgten Abfrageaufträge die Ruhepause adaptiv verkürzt wird.

2. Automatisierungssystem mit einem anwenderspezifischen Schaltkreis zur Erhöhung einer Anzahl gleichzeitg laufender Auftrâge bei der Abwicklung von Aufträgen mit mindestens einer Applikation zur Übertragung von Daten in Erstaufträgen an einen Kommunikationspartner und zur Abfrage von auf den Erstaufträgen beruhenden Ergebnissen beim Kommunikationspartner in Abfrageaufträgen, wobei jeweils bestimmbare Zeitabschnitte in einer Ruhepause vorgesehen sind, während derer die Abfrageaufträge nicht ausgeführt werden,
**dadurch gekennzeichnet, dass** der anwenderspezifische Schaltkreis derart ausgestaltet ist, dass je nach Anzahl der bereits erfolgten Abfrageaufträge die Ruhepause adaptiv verkürzbar ist.

## Claims

1. Method for increasing a number of jobs running simultaneously while jobs are being handled in an automation system, in which method,
- in first jobs, data is transmitted from at least one application to a communication partner, with the first jobs being converted into query jobs if there is a positive acknowledgement from the communication partner, and
- in the query jobs, results based on the first jobs are queried by the application at the communication partner and
- the query jobs are not executed in an idle interval during respective specifiable time segments,
**characterised in that** , depending on the number of the query jobs already executed, the idle interval is shortened adaptively.

2. Automation system with an application-specific integrated circuit for increasing a number of jobs running simultaneously during the handling of jobs with at least one application for transmission of data in first jobs to a communication partner and for querying results based on the first jobs at the communication partner in query jobs, with specifiable time segments being provided in an idle interval in each case during which the query jobs will not be executed,
**characterised in that** the application-specific integrated circuit is embodied such that, depending on the number of the query jobs already executed, the idle interval is able to be shortened adaptively.

## Revendications

1. Procédé d'augmentation du nombre de travaux ayant lieu simultanément lorsque des travaux se déroulent dans un système d'automatisation, procédé dans lequel
- dans des premiers travaux, on transmet des données d'au moins une application à un partenaire de communication, dans lequel, si le partenaire de communication émet un accusé de réception positif, les premiers travaux sont transformés en des travaux d'interrogation, et
- dans les travaux d'interrogation, il est demandé chez le partenaire de communication des résultats de l'application reposant sur les premiers travaux et
- les travaux d'interrogation ne sont pas exécutés dans une pause de repos pendant respectivement des laps de temps pouvant être déterminés,
**caractérisé en ce que**, suivant le nombre des travaux d'interrogation déjà effectués, on écourte de manière adaptée la pause de repos.

2. Système d'automatisation comprenant un circuit spécifique à l'utilisateur d'augmentation d'un nombre de travaux ayant lieu simultanément lorsque des travaux se déroulent, comprenant au moins une application pour la transmission de données dans des premiers travaux à un partenaire de communication et pour l'interrogation de résultats reposant sur les premiers travaux chez le partenaire de communication dans des travaux d'interrogation, des intervalles de temps pouvant être déterminés respectivement étant prévus dans une pause de repos pendant laquelle les travaux d'interrogation ne sont pas exécutés,
**caractérisé en ce que** le circuit spécifique à l'utilisateur est tel que la pause de repos peut être écourtée de manière adaptée suivant le nombre des travaux d'interrogation déjà effectués.
